**Europäisches Patentamt**

**European Patent Office**

**Office européen des brevets**

(19)

(11) Veröffentlichungsnummer: **0 141 153**
**B1**

## (12) EUROPÄISCHE PATENTSCHRIFT

(45) Veröffentlichungstag der Patentschrift:
**18.01.89**

(21) Anmeldenummer: **84110606.5**

(22) Anmeldetag: **06.09.84**

(51) Int. Cl.⁴: **B 23 Q 3/155**, B 23 B 41/02

(54) **Magazin für eine Einrichtung zum Werkzeugwechsel an einer ein- oder mehrspindligen Tiefbohrmaschine.**

(30) Priorität: **21.10.83 DE 3338307**

(43) Veröffentlichungstag der Anmeldung:
**15.05.85 Patentblatt 85/20**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**CH-A- 371 938**
**CH-A- 399 130**
**CH-A- 570 236**
**DE-A- 2 512 254**
**DE-C- 676 150**

(73) Patentinhaber: **TBT Tiefbohrtechnik GmbH und Co. KG.,
Siemensstrasse 1, D-7433 Dettingen (DE)**

(72) Erfinder: **Werner, Jenny, Sternbergstrasse 15,
D-7420 Münsingen (DE)**

(74) Vertreter: **Dreiss, Hosenthien & Fuhlendorf,
Gerokstrasse 6, D-7000 Stuttgart 1 (DE)**

ACTORUM AG

**Beschreibung**

Die Erfindung betrifft eine ein- oder mehrspindlige Tiefbohrmaschine mit einer Einrichtung zum Werkzeugwechsel.

Aus dem Dokument DE-C-676 150 ist eine Einrichtung zum Werkzeugwechsel mit Aufnahmeeinrichtungen, die durch Bohrstangen gebildet werden, bekannt. Die Aufnahmeeinrichtung wird durch miteinander fluchtende und mit einem schlitzförmigen Einschnitt versehene runde Öffnungen in parallel zueinander angeordneten Halteplatten gebildet. Die Halteplatten sind miteinander auf einer Tragstange befestigt. Mit der Tragstange werden die Halteplatten jeweils gedreht, so dass je nach Drehstellung eine bestimmte von mehreren Bohrstangen in Arbeitsposition gebracht wird, derart, dass sie mit dem Futter der Antriebsspindel der Tiefbohrmaschine fluchtet und in dieser Position von einer Spannvorrichtung erfasst und in das Futter der Antriebsspindel hineingezogen werden. Während der Bearbeitung wird dabei das Werkstück in einer Spannvorrichtung hin und her bewegt. Es handelt sich also um eine Art «doppelte» Führung der das Werkzeug bildenden Bohrstange durch Antriebsspindel bzw. das auf dieser vorgesehene Futter auf der einen Seite und die Spannvorrichtung auf der anderen Seite, während zwischen beiden Enden das Werkstück hin und her bewegt wird und die Aufnahme der das Werkzeug bildenden Bohrstange zwischen Futter und Antriebsspindel einerseits und Spannvorrichtung andererseits durch die gespannte Einrichtung erleichtert wird. Eine derartige Vorrichtung ist jedoch nicht zur Verwendung bei einer Tiefbohrmaschine geeignet, bei der das Werkstück feststehend angeordnet ist.

Aufgabe der Erfindung ist es, eine ein- oder mehrspindlige Tiefbohrmaschine mit einer Einrichtung zum Werkzeugwechsel zu schaffen, die bei stationär angeordnetem Werkstück das automatische Wechseln der Werkzeuge, die Werkzeuglängen bis zu 1 m oder mehr aufweisen können, geeignet ist. Das durch die Einrichtung gebildete Magazin soll insbesondere die Ablage abgenutzter Werkzeuge und die Entnahme scharfer Werkzeuge in wenigen kurzen einfachen Bewegungsabläufen ermöglichen. Dabei stellt sich im Sinne einer Unteraufgabe noch das Problem, die Lage der Tiefbohrwerkzeuge, sowie scharfe und stumpfe Werkzeuge zu erkennen.

Diese Aufgabe wird erfindungsgemäss dadurch gelöst, dass die Einrichtung durch zylindrisch angeordnete Aufnahmerohre gebildet wird, wobei entlang eines Teils der Länge der Aufnahmerohre deren Querschnitt über einen Winkel von etwas mehr als 180° weggenommen ist derart, dass zur Aufnahme eines Tiefbohrwerkzeuges senkrecht zur Achse des Aufnahmerohres, wobei dessen innerer Durchmesser im wesentlichen gleich dem Durchmesser des Tiefbohrwerkzeuges ist, eine offene Halbschale gebildet wird, von der aus das Tiefbohrwerkzeug in den verbleibenden Teil in Achsrichtung des Aufnahmerohres einschiebbar ist. Vorteilhafte Weiterbildungen der Erfindung sind in den Unteransprüchen definiert.

Ein Ausführungsbeispiel der Erfindung und ihrer vorteilhaften Weiterbildungen wird im folgenden unter Bezugnahme auf die beigefügten Zeichnungen beschrieben. Es stellen dar:

Fig. 1 eine schematische Seitenansicht einer Tiefbohrmaschine;

Fig. 2 eine Draufsicht (entsprechend den Pfeilen II–II in Fig. 1) auf die Tiefbohrmaschine nach Fig. 1;

Fig. 3 eine Vorderansicht (entsprechend den Pfeilen III–III in Fig. 1) der Tiefbohrmaschine nach Fig. 1;

Fig. 4 eine Draufsicht (entsprechend den Pfeilen IV–IV in Fig. 3) auf die Transporteinrichtung, die Bestandteil der Tiefbohrmaschine nach Fig. 1 bis 3 ist;

Fig. 4a einen Schnitt entlang der Linie IVa–IVa in Fig. 4;

Fig. 5 einen Schnitt entlang der Linie V–V in Fig. 4;

Fig. 6 eine Draufsicht auf das Magazin der Tiefbohrmaschine nach Fig. 1 bis 3;

Fig. 6a–6b Schnitte entlang den Linien VIa–VIa, VIb–VIb, VIc–VIc in Fig. 6;

Fig. 7 einen Schnitt entlang der Linie VII–VII in Fig. 6;

Fig. 7a einen Schnitt entlang der Linie VIIa–VIIa in Fig. 7;

Fig. 8 eine Ansicht in Richtung der Pfeile VIII–VIII in Fig. 6;

Fig. 9 eine schematische Darstellung des in der Tiefbohrmaschine nach Fig. 1 bis 3 verwendeten Wechselarms 9;

Fig. 10 einen Schnitt entlang der Linie X–X in Fig. 9;

Fig. 11 einen Schnitt entlang der Linie XI–XI in Fig. 9.

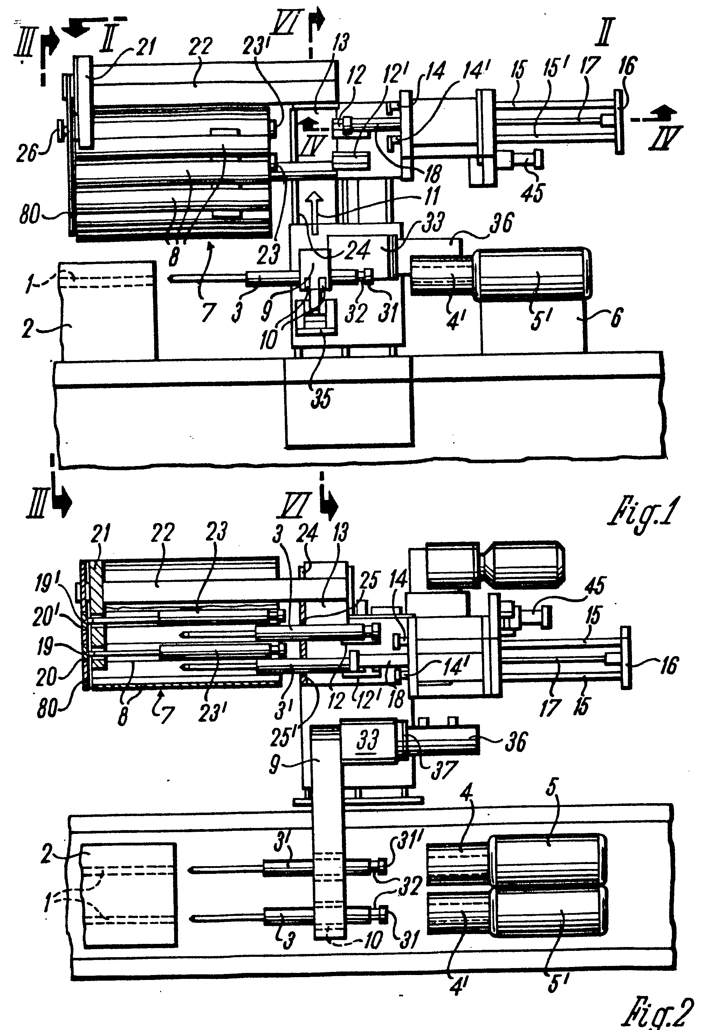

Auf der in den Fig. 1 bis 3 jeweils in Gesamtansicht schematisch dargestellten zweispindligen Tiefbohrmaschine werden Bohrungen 1 in einem Werkstück 2, z.B. dem Zylinderblock eines Kraftfahrzeugmotors, mit Hilfe von Tiebohrwerkzeugen 3, 3' gebohrt; es kann sich dabei um das sog. Einlippen-Bohrverfahren, das BTA-Verfahren, oder das Ejektor-Verfahren handeln; entsprechend sind die Tiefbohrwerkzeuge ausgebildet. Sie werden von Bohrspindeln 4, 4', die von Motoren 5, 5' angetrieben werden, aufgenommen. Bohrspindeln 4, 4' und Motoren 5, 5' sind auf einem Schlitten 6 angeordnet und zum Zweck des Vorschubs in Richtung des Werkstücks 2 verfahrbar.

Die erfindungsgemässe Ausbildung der Tiefbohrmaschine dient nun dazu, die Tiefbohrwerkzeuge 3, 3' bei Abnutzung – die über die Massung des Anpressdruckes zur Erzeugung eines bestimmten Vorschubes festgestellt wird – aus den Bohrspindeln 4, 4' zu entnehmen, in einem allgemein mit 7 bezeichneten Magazin abzulegen, sowie darauf folgend neue, d.h. nicht abgenutzte Tiefbohrwerkzeuge 23, 23' aus dem Magazin 7 zu entnehmen und wiederum in die Bohrspindeln 4, 4' einzusetzen. Die Tiefbohrwerkzeuge sind, so-

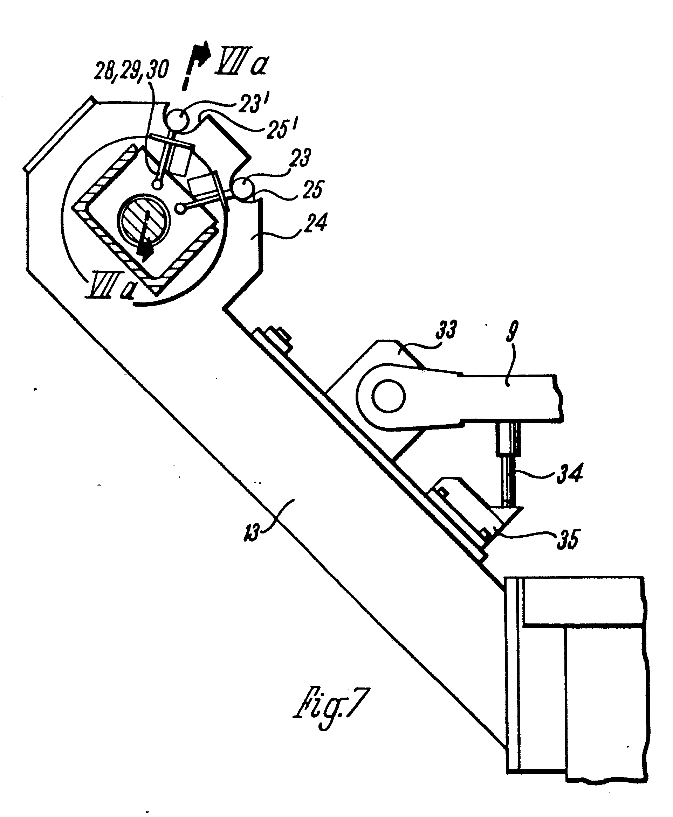

fern sie in das Magazin 7 eingeschoben sind, mit 23, 23' bezeichnet. Dabei sind zwei Positionen möglich (siehe Fig. 7a) durch die sich abgenutzte und noch nicht abgenutzte Tiefbohrwerkzeuge unterscheiden (siehe dazu weiter unten). Wenn die Werkzeuge aus dem Magazin ausgezogen sind und/oder sich in Transport- oder Arbeitsposition befinden, sind sie mit 3, 3' bezeichnet.

Die Bohrspindeln 4, 4' sind mit geeigneten Spannvorrichtungen ausgestattet. Eine hierfür geeignete Spannvorrichtung ist beispielsweise in der deutschen Patentanmeldung P 33 20 612.0–14 v. 8. 6. 1983 desselben Anmelders beschrieben.

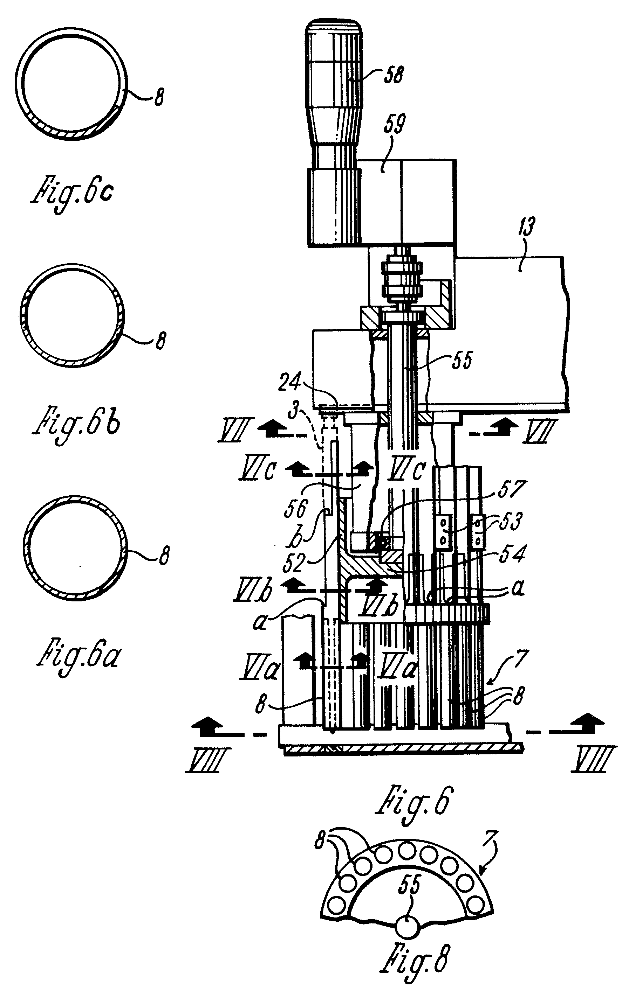

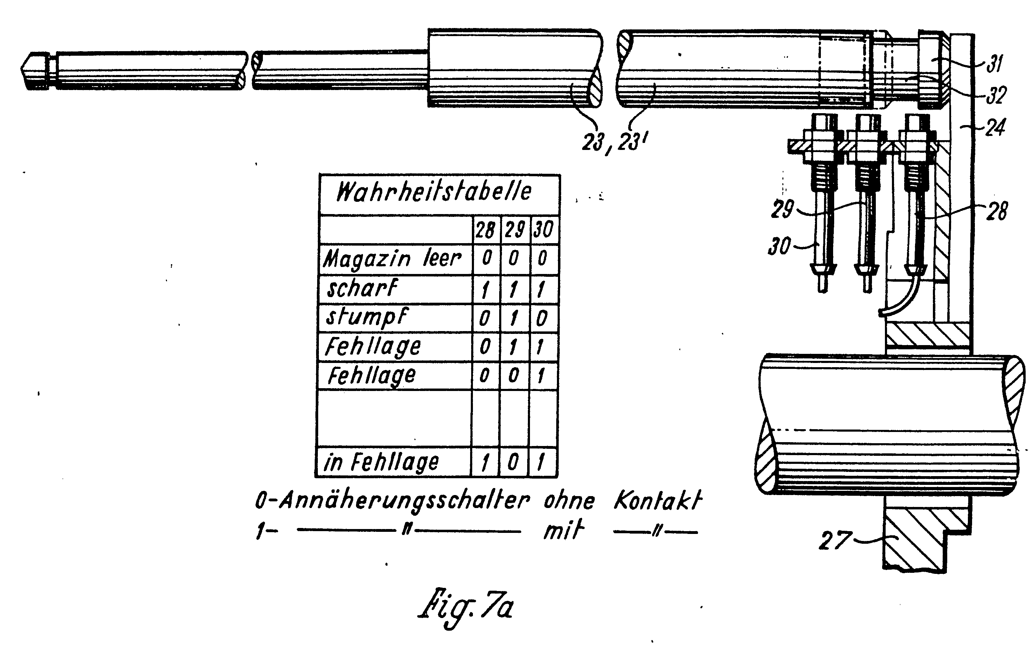

Das Magazin 7 ist in Fig. 3 schematisch und in Fig. 8 genauer dargestellt. Es wird dadurch gebildet, dass mehrere der Aufnahme der Tiefbohrwerkzeuge 3, 3' bzw. 23, 23' bestimmte Aufnahmerohre 8 – wie beim Magazin eines Trommelrevolvers – entlang einer Zylinderfläche angeordnet sind. Wie am besten an dem in Fig. 6 ganz links angeordneten Aufnahmerohr 8 und ferner an den daran angebrachten Schnitten gemäss Fig. 6a bis 6c zu ersehen, ist lediglich das hintere Drittel des Aufnahmerohres 8 mit vollem Querschnitt ausgebildet. Beim mittleren Drittel ist der Querschnitt über etwa einen Winkel von 90° bis 110° weggefräst; bei dem Querschnitt nach Fig. 6c ist der Querschnitt über einen Winkel von etwas mehr als 180° weggefräst. Der Übergang vom Querschnitt nach Fig. 6a zum Querschnitt nach Fig. 6b befindet sich an der Stelle a; der Übergang vom Querschnitt nach Fig. 6b zum Querschnitt nach Fig. 6c befindet sich an der Stelle b. Bei dieser Ausgestaltung der Aufnahmerohre 8 ist es möglich, Tiefbohrwerkzeuge, von denen eines (ganz links in Fig. 6) in seiner Kontur strichpunktiert dargestellt ist, zunächst derart von oben in den nach oben mit mehr als 180° offenen Teil eines Aufnahmerohres 8 einzulegen, dass dort der Bereich des Tiefbohrwerkzeugs, dessen Durchmesser gleich dem Innendurchmesser des Aufnahmerohres 8 ist, abgelegt wird, und dann das Werkzeug in Längsrichtung desselben so weit einzuschieben, dass es auch bei Drehung des gesamten Magazins 7 nicht herausfallen kann, weil dann ja der gesamte Bereich des Tiefbohrwerkzeugs in dem hinteren Teil des Aufnahmerohres 8, der den vollen Querschnitt nach Fig. 6a hat, gehalten wird.

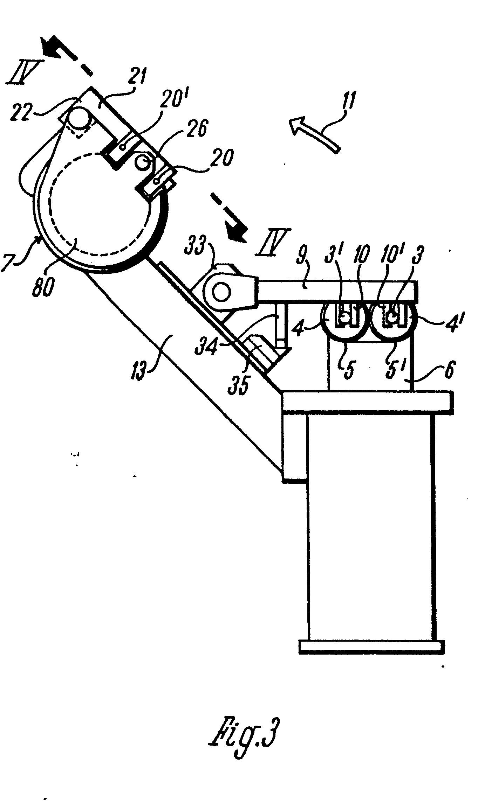

Ein Wechselarm 9, der – entsprechend den zwei Bohrspindeln 4, 4' – mit zwei Greifzangen 10, 10' versehen ist, erfasst in der Arbeitsstellung die in den Bohrspindeln 4, 4' eingespannten Tiefbohrwerkzeuge 3, 3', sobald sie abgenutzt sind. Dies wird in an sich bekannter Weise durch Messung des Anpressdruckes der Tiefbohrwerkzeuge an das Werkstück bei vorgegebener Vorschubgeschwindigkeit festgestellt und braucht daher im vorliegenden Zusammenhang nicht näher beschrieben zu werden. Die Spannvorrichtungen (nicht gezeigt) in den Bohrspindeln 4, 4' werden dann gelöst. Der Schlitten 6 mit den Bohrspindeln 4, 4' fährt nach rechts in Fig. 2 in die dort gezeigte Endstellung. Die Greifzangen 10, 10' halten die Tiefbohrwerkzeuge 3, 3'. Dann wird der Wechselarm 9 in Richtung des Pfeils 11 (Fig. 3) in die Ablage- und Ladestellung verschwenkt und legt die Tiefbohrwerkzeuge 3, 3' auf Prismen 12, 12' (siehe auch Fig. 5) ab, die ortsfest am Ausleger 13 angeordnet sind, der mit der Tiefbohrmaschine fest verbunden ist. Die Greifzangen 10, 10' werden dann geöffnet; die Tiefbohrwerkzeuge 3, 3' werden von Klauen 14, 14' einer Transporteinrichtung in die Aufnahmerohre 8 des Magazins 7 eingeschoben. Die Klauen 14, 14' befinden sich an dem (in Fig. 1) linken Ende von Stangen 15, 15', die über einen Steg 16 miteinander verbunden sind. An dem Steg greift eine Kolbenstange 17 an, die in einem doppeltwirkenden Zylinder 18 angeordnet und in beiden Richtungen hydraulisch verschiebbar ist. Dass in Fig. 1 und 2 die Klauen 14, 14' nicht auf derselben waagerechten Linie liegen, ist damit zu erklären, dass die Ebenen, in denen sie liegen, schräg gegenüber der Zeichenebene liegen. Das Hineinschieben der abgenutzten Tiefbohrwerkzeuge 3, 3' in die Aufnahmerohre 8 des Magazins 7 erfolgt so, dass die abgenutzten Tiefbohrwerkzeuge gegenüber den scharfen etwa 30 mm weiter nach vorne zu liegen kommen, und so eine Differenzierung zwischen scharf und stumpf erlauben. Siehe Wahrheitstabelle Fig. 7a. Nach diesem Einschieben der abgenutzten Tiefbohrwerkzeuge 3, 3' in das Magazin 7 wird letzteres gedreht, so dass sich andere Werkzeuge, also z.B. scharfe, d.h. noch nicht abgenutzte Werkzeuge 23, 23' über den Greifzangen 10, 10' befinden. Diese werden mittels der Klauen 14, 14' aus den Aufnahmerohren 8 des Magazins 7 heraus- und in die Auflage auf den Prismen 12, 12' hineingezogen. Dabei greifen die Klauen 14, 14' nach einer Kippbewegung der gesamten Transporteinrichtung in die Nut 32 (Fig. 5) am Ende der Tiefbohrwerkzeuge 23, 23' ein. Die Klauen 14, 14' werden dann wegbewegt. Die Greifzangen 10, 10' erfassen die neuen Werkzeuge 23, 23'. Der Wechselarm 9 schwenkt in umgekehrter Richtung – also entgegengesetzt Pfeil 11 in Fig. 3 – wieder in die Arbeitsposition nach Figuren 1 bis 3. Der Schlitten 6 bewegt sich aus der in Fig. 2 gezeigten Position nach links, so dass die Bohrspindeln 4, 4' die Tiefbohrwerkzeuge 23, 23' in der Position, in der sich in Fig. 2 die Tiefbohrwerkzeuge 3, 3' befinden, umfassen. Die Spannvorrichtungen in den Bohrspindeln 4, 4' werden gespannt. Die Greifzangen 10, 10' werden gelöst. Der Wechselarm 9 schwenkt aus der Stellung heraus, so dass er die Vorschubbewegung des Schlittens 6 nicht behindern kann. Der nächste Arbeitstakt der Tiefbohrmaschine mit scharfen Tiefbohrwerkzeugen 23, 23' kann beginnen. Sobald die entsprechende Abnutzung auch dieser Tiefbohrwerkzeuge festgestellt wird, beginnt der nächste Wechselzyklus.

Aus der bisherigen Beschreibung ergibt sich bereits, dass die abgenutzten Tiefbohrwerkzeuge 3 bzw. 3' in das Magazin so weit in Fig. 1 nach links geschoben werden, bis sie an den Anschlägen 20, 20' anstossen, also ihre Spitzen die mit 19, 19' bezeichneten Positionen einnehmen. Diese Lage ist unterschiedlich von der Lage der noch unbenutzten, also scharfen Tiefbohrwerkzeuge 23, 23'. Diese werden nach Wegklappen der Rückwand 80 in die eingezeichnete Position von links her (Fig. 1) in die Aufnahmerohre 8 im Magazin 7 eingeschoben und nehmen die für die Tiefbohrwerkzeuge 23, 23' eingezeichnete Position ein, in der sie so weit eingeschoben sind, dass sie mit ihrem (in Fig. 1) rechten Ende, also dem Einspannschaft, an Platte 24 anstossen. Die Platte 24 hat in Höhe derjenigen Aufnahmerohre 8, die mit den Anschlägen 20, 20' und den Prismen 12, 12' fluchten, Ausnehmungen 25, 25'. Wenn also von links Tiefbohrwerkzeuge in die Aufnahmerohre 8 eingesteckt werden, so geht dies bei allen Aufnahmerohren 8 ausser denen, deren linkes Ende durch die Anschläge 20, 20' verdeckt ist. Diese sind die einzigen, in deren Verlängerung nach rechts die Platte 24 keinen Anschlag darstellt, weil dort sich die Ausnehmungen 25, 25' befinden. Somit ist die Lage aller scharfen Tiefbohrwerkzeuge 23, 23', die – bei weggeklappter Platte 80 – von links so weit wie möglich in die Aufnahmerohre 8 gesteckt werden, durch Anschlag an Platte 24 eindeutig definiert. Vgl. Fig. 5 ganz rechts oben und in Fig. 6 das Tiefbohrwerkzeug ganz links. Die Platte 80 kann nach Lösen des Griffes 26 weggeklappt werden.

Die Tiefbohrwerkzeuge können also zwei Lagen einnehmen:

a) die unbenutzten scharfen Tiefbohrwerkzeuge 23, 23' sind in die Aufnahmerohre 8 von links eingeschoben (manuell; bei weggeklappter Platte 80), und zwar bis zum Anschlag an Platte 24;

b) die abgenutzten Tiefbohrwerkzeuge 3, 3' sind in die Aufnahmerohre 8 von rechts her eingeschoben (von der Transporteinrichtung 14–18 nach Ablage durch den Wechselarm 9 auf Prismen 12, 12' bzw. in den oben offenen Teil der Aufnahmerohre 8), und zwar bis zum Anschlag an Anschlägen 20, 20', wobei das Einschieben durch die Platte 24 nicht behindert ist, da diese an diesen Stellen Ausnehmungen 25, 25' aufweist.

Die unterschiedliche Lage der abgenutzten sowie der noch unbenutzten scharfen Tiefbohrwerkzeuge wird dazu benutzt, um festzustellen, ob Tiefbohrwerkzeuge, die von der Transporteinrichtung 14–18 aus den Aufnahmerohren 8 nach rechts in eine Position gezogen werden, in der sie von den Greifzangen 10, 10' des Wechselarmes 9 erfasst werden, benutzt sind oder noch scharf sind. Sind es abgenutzte Tiefbohrwerkzeuge, dann schaltet die Maschine ab und gibt ein Signal, auf das hin eine Neufüllung des Magazins mit scharfen Tiefbohrwerkzeugen veranlasst wird. Auf diese Weise wird vermieden, dass in der Ablage- und Ladeposition des Wechselarms 9 nach der Ablage der abgenutzten Tiefbohrwerkzeuge dieses erneut mit bereits abgenutzten Tiefbohrwerkzeugen geladen wird.

Es ist sichergestellt, dass der beschriebene Zyklus des Werkzeugwechsels so lange abläuft, wie den Aufnahmerohren 8 des Magazins 7 noch nicht abgenutzte, scharfe Tiefbohrwerkzeuge entnommen werden können.

Die Art und Weise der Feststellung, ob die Werkzeuge abgenutzt sind oder nicht, ist in Fig. 7 dargestellt. Auf dem Ausleger 13 ist eine Trägerplatte 27 angeordnet. Sie trägt in Richtung der Lage der Tiefbohrwerkzeuge im Magazin hintereinander drei Annäherungsschalter 28 bis 30. Bei der eingezeichneten Lage eines scharfen Tiefbohrwerkzeuges 23, 23', das mit seinem vorderen Bund 31 an der Anschlagplatte 24 anliegt, liegen alle Annäherungsschalter 28, 29, 30 auf kurzem Abstand zu einer Aussenfläche des Tiefbohrwerkzeuges. Sie haben daher alle im Sinne ihrer Funktion mit dem Tiefbohrwerkzeug 23 oder 23' «Kontakt», liefern also ein Signal mit dem logischen Wert «1». In strichpunktierten Linien ist die Lage eines Tiefbohrwerkzeuges 3, 3' eingezeichnet, das abgenutzt ist, d.h. dessen Spitzen 10 bzw, 19' an den Anschlägen 20, 20' anliegen. Hier liefern die Annäherungsschalter 28, 29 bzw. 30 Signale mit den logischen Werten «0», «1», «0». Im einzelnen ergeben sich die verschiedenen Anzeigen aus der Wahrheitstabelle, die zu Fig. 7 dazugehört.

Das bedeutet, dass die Ablage abgenutzter stumpfer Werkzeuge im Magazin in einer anderen Lage erfolgt als das Einlegen scharfer Werkzeuge. Die Abtastung der Lage durch Annäherungsschalter oder andere Messeinrichtungen erlaubt die Feststellung, ob die Tiefbohrwerkzeuge im Magazin noch scharf sind. Diese Feststellung erfolgt vor Übernahme von Tiefbohrwerkzeugen aus den Aufnahmerohren 8 in die Position, in der sich die Greifzangen 10, 10' in Ablage- und Ladeposition befinden, also für die Tiefbohrwerkzeuge, die sich in den Aufnahmerohren 8 befinden, die in der jeweiligen Stellung des Magazins 7 mit den prismen 12, 12' fluchten und durch die Transporteinrichtung 14–18 nach rechts verschiebbar sind.

Auf diese Weise wird vermieden, dass der automatische Wechselzyklus dazu führen kann, bereits abgenutzte Tiefbohrwerkzeuge in die Greifzangen 10, 10' des Wechselarmes 9 und von dort in die Bohrspindel 4, 4' zu laden.

Die entsprechenden elektrischen Steuerungseinrichtungen ergeben sich für den Fachmann ohne weiteres. Es ist lediglich erforderlich, entsprechend der in Fig. 7a wiedergegebenen Wahrheitstabelle für den Fall des Vorhandenseins scharfer Werkzeuge den weiteren Zyklus freizugeben und für den Fall anderer Signale zu stoppen und diese Tatsache durch ein Hupsignal oder eine Lichtanzeige kenntlich zu machen.

Beim Ausführungsbeispiel und der dort gezeigten Abtastung durch Annäherungsschalter 28, 29, 30 entlang der axialen Richtung des Tiefbohrwerkzeuges ist hierzu die Nut 32 eingesetzt worden, die es gleichzeitig ermöglicht, die Tiefbohrwerkzeuge mittels der Klauen 14, 14' aus den Aufnahmerohren 8 des Magazins 7 herauszuziehen.

Der Wechselarm 9 ist drehbar in einem Lagerbock 33 am Ausleger 13 gelagert. Er wird in der Arbeitsstellung nach Fig. 1 bis 3 dadurch abgestützt, dass ein mit ihm verbundener Stützteil 34 auf einem Gegenlager 35 aufliegt. Den Drehantrieb des Wechselarms besorgt der hydraulische Drehzylinder 36 über ein Getriebe 37.

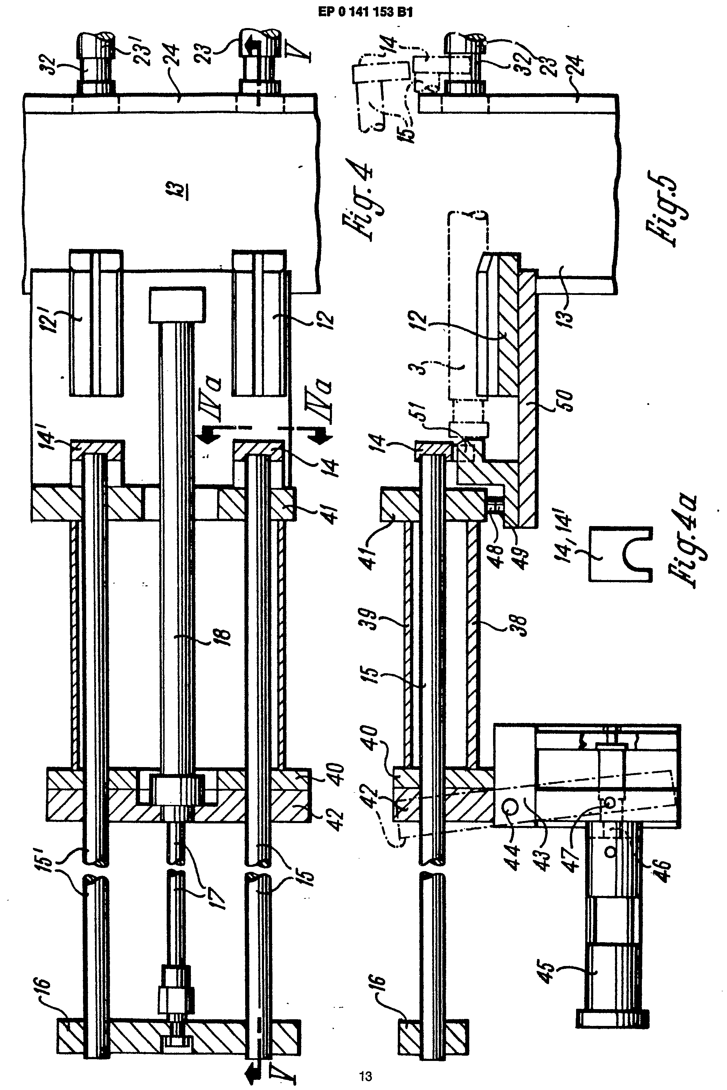

Die Fig. 4 und 5 zeigen die Transporteinrichtung, genauer: den Mechanismus zur Verschiebung der Klauen 14, 14'. Fig. 4 ist eine Schräg-Draufsicht auf Fig. 3. Die Klauen 14, 14', deren Form aus Fig. 4a ersichtlich ist, sind – wie bereits erwähnt – an den Stangen 15, 15' befestigt. Diese Stangen 15, 15' sind ihrerseits über den Steg 16 miteinander verbunden und über die Kolbenstange 17 mittels des Zylinders 18 hydraulisch in beiden Richtungen verschiebbar.

Damit die Klauen 14 in die Nut 32 in den Tiefbohrwerkzeugen einschwenken können, wie dies aus Fig. 5 rechts oben ersichtlich ist, muss die gesamte durch Stangen 15 mit Klauen 14, ferner durch Quersteg 16 und Zylinder 18 gebildete Transporteinrichtung kippbar sein. Dies erfolgt dadurch, dass die Stangen 15 und der Zylinder 18 in einem durch zwei parallele Platten 38, 39, sowie die beiden Querstege 40 und 41 gebildeten Gehäuse geführt sind. Dieses Gehäuse ist an der Schwenkplatte 42 fest angebracht, die in dem Lagerbock 43 um die Welle 44 gekippt werden kann. Der Lagerbock 43 ist an dem Ausleger 13 angeordnet. Das Kippen der Schwenkplatte 42 erfolgt mittels des hydraulisch betätigten, doppelt wirkenden Zylinders 45, in dem eine Kolbenstange 46 geführt ist, die an der Schwenkplatte 43 über das Gelenk 47 angreift. Zu diesem Zweck ist das untere Ende der Schwenkplatte 42 als Gabel ausgebildet. Das Kippen erfolgt so, dass die einzelnen Teile die in Fig. 5 strichpunktiert eingezeichnete Position einnehmen, wobei der Übersichtlichkeit halber diese Kipplage lediglich für die Schwenkplatte 42, die Stangen 15 und die Klauen 14 dargestellt ist. – Mit dem Quersteg 41 verbunden ist ein Anschlag 48, der in der gezeigten Normallage auf dem Anschlag 49 aufsetzt, der wiederum an der Platte 50 angeordnet ist, die an dem Ausleger 13 befestigt ist. Die Platte 50 trägt ferner noch eine Anschlagleiste 51, an die von den Klauen 14, 14' das Tiefbohrwerkzeug 23, 23' herangezogen wird, bevor die Greifzangen 10, 10' es erfassen.

Fig. 6 zeigt im Detail das Magazin 7 mit den Aufnahmerohren 8. Die Aufnahmerohre 8 sind auf einem Zylinder 52 angeordnet und auf diesem durch Klemmstücke 53, die mit dem Zylinder 52 verschraubt sind, gehalten. Der Zylinder 52 ist integral mit einer Nabe 54 ausgebildet. Die Nabe 54 ist mit einer Welle 55 verbunden, die in dem Lagerrohr 56 mit Hilfe von Lagern 57 gelagert ist. Das Lagerrohr 56 ist mit dem Ausleger 13 verbunden. Der schrittweise und taktweise Antrieb der Welle 55, der die schrittweise Drehung des Magazins 7 bringt, erfolgt über Motor 58 und Schrittgetriebe 59.

Das anhand der Fig. 1 bis 8 beschriebene Ausführungsbeispiel geht von der Beschickung einer. zweispindligen Tiefbohrmaschine aus. Entsprechend werden immer zwei Tiefbohrwerkzeuge gleichzeitig aus den beiden Spindeln 4, 4' entnommen, in zwei Aufnahmebohren 8 des Magazins 7 abgelegt und gleichzeitig zwei scharfe Werkzeuge 23, 23' wieder entnommen. Das bedeutet, dass der Abstand der Greifzangen 10, 10' (Fig. 3) dem Abstand der Spindeln entsprechen muss und dass die Aufnahmerohre 8 – allgemeiner ausgedrückt: die für die einzelnen Tiefbohrwerkzeuge vorgesehenen Aufnahmeeinrichtungen im Magazin –

paarweise ebenfalls mit demselben Abstand angeordnet werden müssen, wobei die Schrittbewegung, mit der das Magazin weitergedreht bzw. – allgemein ausgedrückt: weiterbewegt – wird, so abgestimmt sein muss, dass jeweils in jedem Schritt ein anderes Paar sich dem Zugriff der Transporteinrichtung mit ebenfalls zwei Klauen eröffnet. Werden aus einem Paar Aufnahmerohre 8 zwei Tiefbohrwerkzeuge entnommen, dann bleiben diese Aufnahmerohre zunächst leer. Das Magazin bleibt in Stellung und nimmt dieselben Tiefbohrwerkzeuge als stumpfe Werkzeuge nach der Nutzung wieder auf. Dann dreht sich das Magazin einen Schritt weiter und es werden zwei scharfe Werkzeuge entnommen.

Während das Ausführungsbeispiel von einer Art Trommelmagazin ausging, ist es auch möglich, andere Magazine aufzubauen, die sich nicht drehen, sondern Aufnahmeeinrichtungen etwa in verschiedenen Lagen übereinander aufweisen.

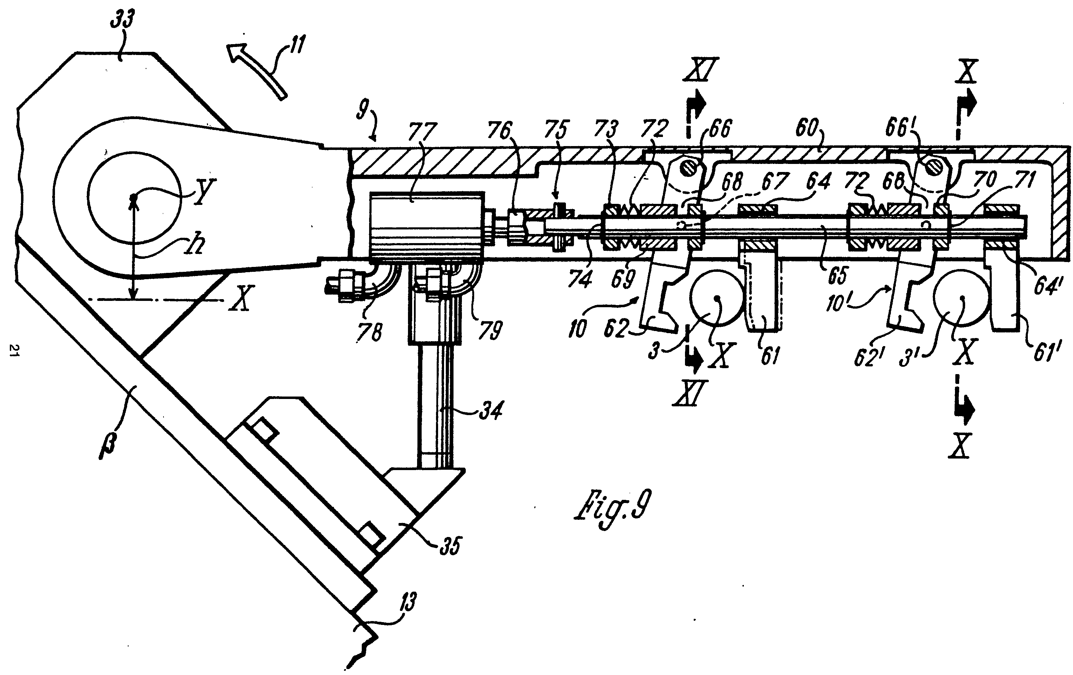

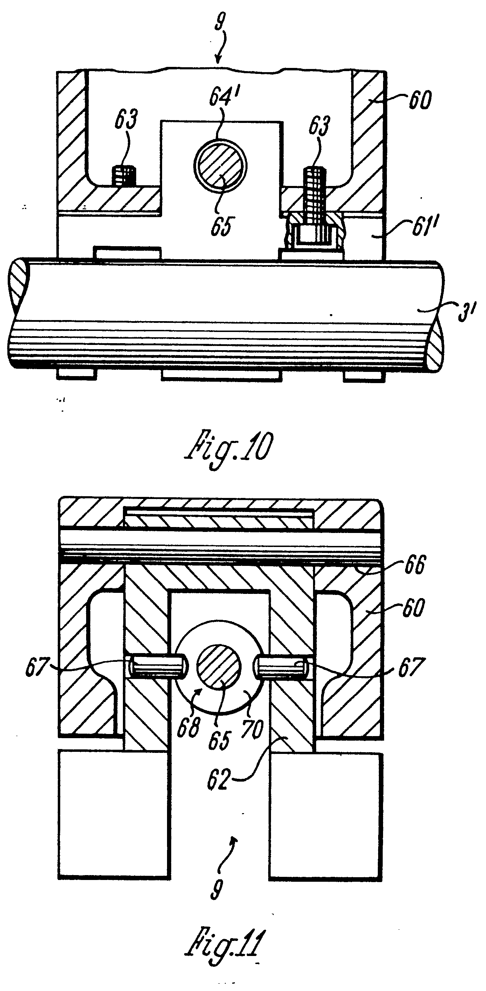

Fig. 9 zeigt im einzelnen den Aufbau des Wechselarmes 9. Er wird gebildet durch einen im Querschnitt U-förmigen unten offenen Träger 60. Die Greifzangen 10, 10' bestehen jeweils aus einem feststehenden Anschlagteil 61, 61' und einem beweglichen Andrückteil 62, 62'. Die feststehenden Anschlagteile 61, 61' sind, wie aus Fig. 10 ersichtlich, an dem Träger 60 mittels Schrauben 63 fest angebracht. In Lagerbuchsen 64, 64' ist ein Steuerschieber 65 verschiebbar. Dieser Steuerschieber 65 dient dazu, die bei 66, 66' am Träger 60 beweglich angelenkten Andrückteile 62, 62' so zu verschwenken, dass zwischen ihnen und den feststehenden Anschlagteilen 61, 61' die Tiefbohrwerkzeuge 3, 3' oder 23, 23' festgeklemmt werden. Zu diesem Zweck greifen an den Andrückteilen 62 bzw. 62' angeordnete Stifte 67 (vgl. Fig. 11) von beiden Seiten in den Ringspalt 68 ein, der gebildet wird zwischen den Ringen 69 und 70, die beide auf dem Steuerschieber 65 angeordnet sind, wobei der Ring 70 durch den Sicherungsring 71 auf dem Steuerschieber 65 gegen eine Verschiebung nach rechts gesichert ist, wohingegen der Ring 69 durch Tellerfedern 72 gegenüber einem weiteren Ring 73 abgestützt ist, der seinerseits durch den Sicherungsring 74 auf dem Steuerschieber 75 gegen eine Verschiebung nach links gesichert ist. Erfolgt nun eine Verschiebung des Steuerschiebers 65 in Fig. 9 nach rechts, so wird das Tiefbohrwerkzeug 3 bzw. 3' von dem Andrückteil 62 bzw. 62' mit einer Kraft gegen den Anschlagteil 61 bzw. 61' gedrückt, die davon abhängt, in welchem Mass die Tellerfedern 72 von dem Ring 73 zusammengepresst werden. Eine solche Pressung beginnt, wenn der Andrückteil 62 an dem Tiefbohrwerkzeug 3 anliegt, so dass eine weitere Verschiebung des Rings 69 nach rechts nicht möglich ist. Bewegt sich von diesem Moment an der Steuerschieber 65 und mit ihm der Ring 73 nach rechts (in Fig. 9), dann werden die Tellerfedern 72 zusammengepresst.

Der Steuerschieber 65 ist beweglich über eine Gabelverbindung 75 mit der Kolbenstange 76 eines doppeltwirkenden hydraulisch angetriebenen Zylinders 77 verbunden, dem unter Druck stehen-

des Medium über die Anschlüsse 78 bzw. 79 zugeführt wird.

Bei der gesamten Anordnung kommt es auf eine sehr hohe Genauigkeit der Positionierung der Tiefbohrwerkzeuge bezüglich der Aufnahmeöffnungen der Bohrspindeln 4, 4' an. Aus diesem Grunde liegt auch die Achse X der Tiefbohrwerkzeuge 3, 3' um den Abstand h bezüglich der Waagerechten niedriger als der Drehpunkt Y des Wechselarmes 9, damit sich bei einem Verschwenken des Wechselarms 9 weg vom eingespannten Tiefbohrwerkzeug 3 bzw. 3' in Richtung des Pfeils 11 zunächst eine Bewegung des am Träger 60 feststehenden Anschlagteils 61 bzw. 61' seitlich weg vom Tiefbohrwerkzeug ergibt. Eine solche seitliche Bewegungskomponente ist aber dann gegeben, wenn in der bezeichneten Weise die Achse X um einen bestimmten Betrag h unterhalb des Drehpunktes Y angeordnet ist. Die Position z.B. des Anschlagteils 61 kurz nach Beginn der Schwenkbewegung ist in Fig. 9 strichpunktiert eingezeichnet. Auf diese Weise entsteht beim Wegfahren der Greifzangen 10, 10' von den eingespannten Tiefbohrwerkzeugen kein Klemmen oder Drücken od.dgl.

Aus den Fig. 9 bis 11 geht auch hervor, wie man mit ähnlicher Konstruktion an einem Wechselarm statt zwei auch vier oder sechs Greifzangen versehen kann; dies wäre dann der Fall, wenn man – wie oben erwähnt – auch entsprechend grössere Magazine, ggf. mit anderen Ablagesystemen als dem trommelartigen Aufbau, einsetzen würde.

Es wird auf die beiden zusammenhängenden Anmeldungen EP-A-141 152 und EP-A-141 154 hingewiesen, die vom gleichen Anmeldetag stammen.

Bezugszeichenliste
TBT Tiefbohrtechnik GmbH & Co. KG
4301 086 – Magazin für eine Einrichtung zum Werkzeugwechsel an einer ein- oder mehrspindligen Tiefbohrmaschine
a  = Stelle des Übergangs von Fig. 6a auf 6b
b  = Stelle des Übergangs von 6b auf 6c
X  = Achse von 3
Y  = Drehpunkt von 9
h  = Abstand in der Höhe zwischen X, Y
1 Bohrungen
2 Werkstück
3 Teifbohrwerkzeug
4 Bohrspindel
5 Motoren
6 Schlitten
7 Magazin
8 Aufnahmerohre
9 Wechselarm
10 Greifzange
11 Pfeil
12 Prismen
13 Ausleger
14 Klauen
15 Stangen
16 Steg
17 Kolbenstange
18 Zylinder
19 Spitzen von 3
20 Anschläge
21 Bügel
22 Ausleger
23 Tiefbohrwerkzeuge
24 Platte
25 Ausnehmungen
26 Griff
27 Trägerplatte
28–30 Annäherungsschalter
31 Bund
32 Nut
33 Lagerbock
34 Stützteil
35 Gegenlager
36 Drehzylinder
37 Getriebe
38 Platte
39 Platte
40 Quersteg
41 Quersteg
42 Schwenkplatte
43 Lagerbock
44 Welle
45 Zylinder
46 Kolbenstange
47 Gelenk
48 Anschlag
49 Anschlag
50 Platte
51 Anschlagleiste
52 Zylinder
53 Klemmstücke
54 Nabe
55 Welle
56 Lagerrohr
57 Lager
58 Motor
59 Schrittgetriebe
60 Träger, U-förmig
61 Anschlagteil
62 Antriebsteil
63 Schrauben
64 Lagerbuchsen
65 Steuerschieber
66 Lager
67 Stift
68 Ringspalt
69 Ring
70 Ring
71 Sicherungsring
72 Tellerfedern
73 Ring
74 Sicherungsring
75 Gabelverbindung
76 Kolbenstange
77 Zylinder
78 Anschluss
79 Anschluss
80 Platte

**Patentansprüche**

1. Ein - oder mehrspindlige Tiefbohrmaschine mit einer Einrichtung zum Werkzeugwechsel, dadurch gekennzeichnet, dass die Einrichtung (7) durch zylindrisch angeordnete Aufnahmerohre (8) gebildet wird, wobei entlang eines Teils der Länge der Aufnahmerohre (8) deren Querschnitt über einen Winkel von etwas mehr als 180° weggenommen ist derart, dass zur Aufnahme eines Tiefbohrwerkzeuges (3, 3') senkrecht zur Achse des Aufnahmerohres (8), wobei dessen innerer Durchmesser im wesentlichen gleich dem Durchmesser des Tiefbohrwerkzeuges (3, 3') ist, eine offene Halbschale gebildet wird, von der aus das Tiefbohrwerkzeug in den verbleibenden Teil in Achsrichtung des Aufnahmerohres (8) einschiebbar ist.

2. Tiefbohrmaschine nach Anspruch 1, dadurch gekennzeichnet, dass – zum Einlegen von Tiefbohrwerkzeugen mit absatzweise unterschiedlichen Durchmessern – das Aufnahmerohr entlang eines weiteren mittleren Teiles seiner Länge der Aufnahmerohre (8) im Querschnitt über einen zur Aufnahme des Teils des Tiefbohrwerkzeuges mit geringerem Durchmesser weggenommen ist.

3. Tiefbohrmaschine nach Anspruch 1 oder 2, dadurch gekennzeichnet, dass die Aufnahmerohre (8) auf einer Nabe (54) oder Kette angeordnet sind, die auf einer Welle (55) sitzt, die von einem Motor (58) über ein Schrittgetriebe (59) antreibbar ist.

4. Tiefbohrmaschine nach Anspruch 1 oder einem der folgenden, dadurch gekennzeichnet, dass an einer Stirnseite desselben in einer Drehstellung des Magazins (7), einer bestimmten Zahl von Aufnahmerohren (8) in Längsrichtung zugeordnet, Anschläge (20, 20') angeordnet sind derart, dass das Einschieben von Tiefbohrwerkzeugen in diese Aufnahmerohre von der Beladeseite her nicht möglich ist und von der anderen Seite her dadurch begrenzt wird.

5. Tiefbohrmaschine nach Anspruch 4, dadurch gekennzeichnet, dass auf der anderen Stirnseite ebenfalls Abschläge (24) für die der genannten Gruppe nicht zugehörigen Aufnahmebohrungen (8) vorgesehen sind.

6. Tiefbohrmaschine nach Anspruch 5, dadurch gekennzeichnet, dass die genannten Anschläge durch eine Platte (24) mit Ausnehmungen (25, 25') gebildet werden, wobei die Ausnehmungen mit den Anschlägen (20, 20') an der gegenüberliegenden Stirnseite fluchten.

7. Tiefbohrmaschine nach Anspruch 5, dadurch gekennzeichnet, dass Messeinrichtungen (28, 29, 30) vorgesehen sind, die die Lage eines Tiefbohrwerkzeuges in einem Aufnahmerohr und dadurch eine Unterscheidung scharfes Werkzeug – stumpfes Werkzeug feststellen, dass es mit seinem einen Ende bis zum genannten Anschlag (24) reicht.

8. Tiefbohrmaschine nach Anspruch 7, dadurch gekennzeichnet, dass die Messeinrichtungen (28, 29, 30) durch Annäherungsschalter gebildet werden.

**Claims**

1. A single-spindle or multi-spindle deep boring machine having a tool change device characterised in that the device (7) is formed by cylindrically arranged receiving tubes (8), wherein along a part of the length of the receiving tubes (8) the cross-section thereof is removed over an angle of somewhat more than 180°, in such a way that for the purposes of receiving a deep boring tool (3, 3') perpendicularly to the axis of the receiving tube (8), wherein the inside diameter thereof is substantially equal to the diameter of the deep boring tool (3, 3'), an open half-shell is formed, from which the deep boring tool can be pushed into the remaining part in the axial direction of the receiving tube (8).

2. A deep boring machine according to claim 1 characterised in that, for inserting deep boring tools with stepwise changing diameters, along a further middle part of the length of the receiving tubes (8) the cross-section of the tubes is removed over a portion suitable for receiving the part of the deep boring tool, which has the smaller diameter.

3. A deep boring machine according to claim 1 or claim 2 characterised in that the receiving tubes (8) are arranged on a hub (54) or chain, which is carried on a shaft (55) which is drivable by a motor (58) by way of stepping transmission (59).

4. A deep boring machine according to claim 1 or one of the following claims characterised in that at one end thereof, in rotary position of the magazine (7), associated with a given number of receiving tubes (8) in the longitudinal direction, abutments (20, 20') are arranged in such a way that the insertion of deep boring tools into those receiving tubes is not possible from the loading side and is restricted thereby from the other side.

5. A deep boring machine according to claim 4 characterised in that abutments (24) for the receiving bores (8) which do not belong to the specified group are also provided at the other end.

6. A deep boring machine according to claim 5 characterised in that said abutments are formed by a plate (24) with openings (25, 25'), wherein the openings are aligned with the abutments (20, 20') at the opposite end.

7. A deep boring machine according to claim 5 characterised in that there are provided measuring means (28, 29, 30) which detect the position of a deep boring tool in a receiving tube and thereby make a distinction between a sharp tool and a blunt tool, by virtue of its extending with its one end to said abutment (24).

8. A deep boring machine according to claim 7 characterised in that the measuring means (28, 29, 30) are formed by proximity switches.

**Revendications**

1. Matériel de perçage en grande profondeur monobroche ou multibroche, avec un dispositif pour le changement d'outil, caractérisé en ce que le dispositif (7) est constitué de tubes récepteurs (8) disposés de façon cylindrique, la section transversale des tubes récepteurs (8) étant, sur une partie de leur longueur, réduite suivant un angle de quelque peu supérieur à 180°, de façon que pour la réception d'un outil de perçage en grande profondeur (3, 3') perpendiculairement à l'axe du tube récepteur (8), dont le diamètre intérieur est sensiblement identique au diamètre de l'outil de perçage en grande profondeur (3, 3'), il est constitué une demi-coquille ouverte, depuis laquelle l'outil de perçage en grande profondeur peut être introduit dans la partie restante du tube récepteur (8) dans le sens axial.

2. Matériel de perçage en grande profondeur selon la revendication 1, caractérisé en ce que – pour la mise en place d'outils de perçage en grande profondeur avec des diamètres successivement différents – le long du tube récepteur, une autre partie centrale de la longueur du tube récepteur (8) présente une section réduite pour la réception de la partie de l'outil de perçage en grande profondeur ayant un plus petit diamètre.

3. Matériel de perçage en grande profondeur selon la revendication 1 ou 2, caractérisé en ce que les tubes récepteurs (8) sont montés sur un moyeu (54) ou une chaîne qui est porté par un arbre (55) pouvant être entraîné par un moteur (58) par l'intermédiaire d'un mécanisme pas-à-pas (59).

4. Matériel de perçage en grande profondeur selon la revendication 1 ou l'une des suivantes, caractérisé en ce que sur la face frontale de ce matériel, dans une position de rotation du magasin (7), associées à un nombre défini de tubes récepteurs (8) dans le sens de la longueur, des butées (20, 20') sont disposées de telle façon que l'insertion d'outils de perçage en grande profondeur dans ces tubes récepteurs n'est pas possible par la face de chargement et qu'elle est ainsi limitée à l'autre face.

5. Matériel de perçage en grande profondeur selon la revendication 4, caractérisé en ce que sur l'autre face frontale, des butées (24) sont également prévues pour les tubes récepteurs (8) n'appartenant pas audit groupe.

6. Matériel de perçage en grande profondeur selon la revendication 5, caractérisé en ce que lesdites butées sont constituées par une plaque (24) avec des cavités (25, 25'), les cavités étant en alignement avec les butées (20, 20') sur la face frontale opposée.

7. Matériel de perçage en grande profondeur selon la revendication 5, caractérisé en ce que des dispositifs de mesure (28, 29, 30) sont prévus pour fixer la position d'un outil de perçage en grande profondeur dans un tube récepteur et pour différentier un outil émoussé d'un outil aiguisé, dont l'une des extrémités arrive jusqu'à ladite butée (24).

8. Matériel de perçage en grande profondeur selon la revendication 7, caractérisé en ce que les dispositifs de mesure (28, 29, 30) sont constitués par des commutateurs de proximité.

Fig.1

Fig.2

Fig.3

Fig. 4

Fig. 4a

Fig. 5

EP 0 141 153 B1

Fig.6c

Fig.6b

Fig.6a

Fig.6

Fig.8

Fig.7

| Wahrheitstabelle | 28 | 29 | 30 |
|---|---|---|---|
| Magazin leer | 0 | 0 | 0 |
| scharf | 1 | 1 | 1 |
| stumpf | 0 | 1 | 0 |
| Fehllage | 0 | 1 | 1 |
| Fehllage | 0 | 0 | 1 |
|  |  |  |  |
| in Fehllage | 1 | 0 | 1 |

0-Annäherungsschalter ohne Kontakt
1- —————— " —————— mit —— " —

*Fig. 7a*

EP 0 141 153 B1

*Fig.9*

EP 0 141 153 B1

Fig.10

Fig.11